(19) **Europäisches Patentamt**

**European Patent Office**

**Office européen des brevets**

(11) **EP 1 046 879 B1**

(12) **EUROPÄISCHE PATENTSCHRIFT**

(45) Veröffentlichungstag und Bekanntmachung des Hinweises auf die Patenterteilung:
**16.10.2002 Patentblatt 2002/42**

(51) Int Cl.⁷: **F42D 1/00**, F42D 1/055, G01V 1/13

(21) Anmeldenummer: **00107537.3**

(22) Anmeldetag: **07.04.2000**

(54) **Verfahren zum Sprengen von Gesteinsmassen**

Method for blasting of rocks

Procédé pour le sautage de masses rocheuses

(84) Benannte Vertragsstaaten:
**AT BE CH CY DE DK ES FI FR GB GR IE IT LI LU MC NL PT SE**

(30) Priorität: **23.04.1999 DE 19918491**

(43) Veröffentlichungstag der Anmeldung:
**25.10.2000 Patentblatt 2000/43**

(73) Patentinhaber: **Roboth Vertriebsgesellschaft mbH**
**45128 Essen (DE)**

(72) Erfinder: **Rosenstock, Jochen**
**31675 Bückeburg (DE)**

(74) Vertreter: **Nunnenkamp, Jörg, Dr. et al**
**Andrejewski, Honke & Sozien**
**Patentanwälte**
**Theaterplatz 3**
**45127 Essen (DE)**

(56) Entgegenhaltungen:
**GB-A- 961 324      US-A- 4 725 991**
**US-A- 5 388 521**

**Beschreibung**

Die Erfindung betrifft ein Verfahren zum Sprengen von Gesteinsmassen oder dergleichen Massen Übertage oder Untertage, wonach in Bohrlöcher Sprengladungen mit jeweils zugehörigem Zünder eingesetzt werden, und wonach die Zünder und deren jeweilige Verzögerungsintervalle zueinander in Abhängigkeit von dem mineralogischen/geologischen Umfeld und den daraus resultierenden seismischen Geschwindigkeiten sowie unter Berücksichtigung des jeweiligen Schussbildes programmiert werden.

Ein solches Sprengverfahren wird in der US 5 388 521 beschrieben. Hier geht es darum, Vibrationen an bestimmten Orten auf ein Minimum zu reduzieren und auf diese Weise die für eine Fragmentierung zur Verfügung stehende Energie zu erhöhen.

Ferner sind Sprengverfahren ohne Einstellung der jeweiligen Verzögerungsintervalle aus der Praxis bzw. der europäischen Patentanmeldung 0 147 688 A2 sowie der deutschen Offenlegungsschrift DE 197 21 839 A1 bekannt.

Bei solchen Sprengverfahren hat sich herausgestellt, dass der Zünder bzw. das eingesetzte Zündmittel wesentlich die Qualität des Sprengergebnisses beeinflusst. Hier unterscheidet man grundsätzlich zwischen elektrischen, nicht elektrischen und elektronischen Zündern.

Bei elektrischen Zündern wird regelmäßig auf einen pyrotechnischen Zündsatz in Verbindung mit einer Glühbrücke zurückgegriffen, welche durch elektrische Energie erhitzt wird. Ein nicht elektrischer Zünder besteht zumeist aus einem dünnen Plastikschlauch, in welchem ein Sprengstoff enthalten ist. Dieser Schlauch wird durch einen Schlag gezündet bzw. durch eine Sprengkapsel seinerseits initiiert. Der Plastikschlauch zündet dann einen ebenfalls pyrotechnischen Verzögerungssatz im eigentlichen Zünder.

Elektronische Zünder kommen ohne einen pyrotechnischen Zündsatz aus. Denn sie erhalten ihre Energie regelmäßig über einen Energiespeicher, beispielsweise einen Kondensator. Dieser Kondensator dient zum Zünden einer Glühbrücke oder einer anderen elektrisch aufheizbaren Vorrichtung, wie dies grundsätzlich in der eingangs bereits angeführten europäischen Schrift oder der deutschen Offenlegungsschrift DE 197 21 839 A1 beschrieben ist.

Ein ähnliches Verfahren ist Gegenstand der US 4 725 991, bei welchem es ebenfalls darum geht, Vibrationen und die Geräuschentwicklung auf ein Minimum zu reduzieren.

Schließlich kennt man Details von in Bohrlöcher eingesetzten Sprengladungen durch die GB 961 324.

Die bisher bekannten Sprengverfahren können nicht in allen Punkten überzeugen. Denn bislang kommt es allenfalls zu einer gegenseitigen Unterstützung benachbarter Bohrlöcher innerhalb einer Bohrlochreihe im Sinne einer Intensivierung der Auflösung der zu sprengenden Gesteinsmassen. Mit anderen Worten lässt sich die Energie eines Folgeschusses an einen vorhergehenden Schuss nicht oder nur unvollkommen ankoppeln. Im Übrigen sind derartige Phänomene bisher mehr oder minder zufällig und praktisch kaum vorhersehbar beobachtet worden. - Hier will die Erfindung insgesamt Abhilfe schaffen.

Der Erfindung liegt das technische Problem zugrunde, ein derartiges Verfahren so weiter zu bilden, dass nicht nur eine gezielte gegenseitige Beeinflussung der von den einzelnen Bohrlöchern ausgehenden Schockwellen ermöglicht wird, sondern zusätzlich noch die Sprengwirkung im Bohrloch beeinflussbar ist.

Zur Lösung dieser Aufgabe schlägt die Erfindung bei einem gattungsgemäßen Verfahren zum Sprengen von Gesteinsmassen oder dergleichen Massen vor, dass jeweils in ein Bohrloch ein elektronischer Bodenzünder und ein elektronischer Kopfzünder eingesetzt sind und auf den gleichen oder einen abweichenden Zündzeitpunkt programmiert werden, und dass dadurch gegenläufige Detonationsfronten in etwa in der Mitte der Ladungssäule unter Verdopplung der Detonationsgeschwindigkeit und beschleunigten Umsetzung der Ladesäule aufeinandertreffen.

Vorzugsweise korrespondieren die eingestellten Zündverzögerungen zwischen erstem und letztem Bohrloch zu einer Zündgeschwindigkeit (horizontale Zündgeschwindigkeit) welche gleich oder größer als die Schallgeschwindigkeit im zu sprengenden Gestein (Gesteinsgeschwindigkeit) ist.

Dabei kommen zumeist elektronische Zünder mit einem stufenlos und exakt einstellbaren Zündzeitpunkt zum Einsatz. Denn mit Hilfe derartiger elektronischer Zünder lassen sich zum ersten Mal frei programmierbare und variierende Zündintervalle von Zünder zu Zünder bzw. von Bohrloch zu Bohrloch einstellen. Dies lässt sich im Kern darauf zurückführen, dass bei elektronischen Zündern - wie bereits beschrieben wurde - auf einen pyrotechnischen Zündsatz bewusst verzichtet wird.

Vielmehr sorgt hier ein dem Energiespeicher bzw. Kondensator nachgeschalteter elektronischer Schalter (zumeist in Form eines Schalttransistors) dafür, dass in dessen leitendem Zustand der Energiespeicher auf das an eine Zündleitung angeschlossene Zündmittel entladen wird. Dabei kann der elektronische Schalter bzw. Schalttransistor mit Hilfe eines Datensteuerteils inklusive zentraler Steuereinheit, also eines Rechners in Form eines Mikrochips, entsprechend gesteuert werden. Auf diese Weise kann der jeweils eingesetzte elektronische Zünder zeitgenau ausgelöst werden, wobei Genauigkeiten unterhalb von einer Millisekunde erreichbar sind.

Darüber hinaus schlägt die Erfindung zur Erhöhung der Sprengwirkung vor, dass einzelne, von den jeweiligen Bohrlöchern ausgehende Schockwellenfronten zur Öffnung des Gefüges des zu sprengenden Gesteins miteinander interferieren. Es kommt also zu einer Interferenz der Schockwellen und folglich auch der erzeugten seismischen Wellen. Dieses Auf- und Ineinandertreffen der verschiedenen multiplen Wellenfronten führt zur gewünschten Öffnung des Gefüges, also dazu, dass sich die Bindungen in den jeweiligen Festkörpern infolge der äußeren Erregung (zumindest teilweise) lösen.

Unter Schockwellen werden nach üblichem Verständnis sich räumlich ausbreitende abrupte, aber stetige Veränderungen von Dichte, Druck und/oder Temperatur des jeweils zu sprengenden Materials verstanden. Eine derartige Schockwelle entsteht, wenn plötzlich ein großer Energiebetrag freigesetzt wird - nämlich durch die beschriebene Explosion bzw. das Zünden der Sprengladung im zugehörigen Bohrloch mit Hilfe des (elektronischen) Zünders. Die Vorderfront dieser Energieausbreitung stellt eine Schockwelle dar. Deren Ausbreitungsgeschwindigkeit bzw. die Schockwellengeschwindigkeit kann ein Vielfaches der Schallgeschwindigkeit des zugehörigen Mediums betragen und bewegt sich vorliegend im Überschallbereich.

Unter seismischen Wellen sind im Rahmen der vorliegenden Erfindung nicht nur Schockwellen bzw. Stoßwellen, sondern jegliche (Erschütterungs-)Wellen zu verstehen, die sich von einem Erregerzentrum (zumeist dem Bohrloch mit darin befindlicher Sprengladung) im zu sprengenden Gestein fortpflanzen.

Da die Ausbreitungsgeschwindigkeit der jeweiligen seismischen Welle - abgesehen von sogenannten Stoßwellen bzw. Schockwellen - vom zugehörigen Material bzw. dessen Kompressibilität (insbes. dem Elastizitätsmodul) abhängt, stellt sich bei bekannter Dichte und vorgegebener Temperatur eine ganz bestimmte und charakteristische Fortpflanzungsgeschwindigkeit ein, die Schallgeschwindigkeit. Diese repräsentiert also praktisch einen materialabhängigen Parameter und kann bei Gesteinen durchaus über 1000 m/s oder sogar mehrere 1000 m/s betragen.

Der Bereich elastischer Deformationen und vorgegebener Kompressibilitäten des die seismische Welle bzw. Schallwelle leitenden Gesteins wird dann verlassen, wenn nicht mehr nur Wellen kleiner Amplitude im Gestein angeregt werden. Denn bei großen, gleichsam schlagartigen Anregungen kommt es zur Ausbildung der bereits angesprochenen Schock- bzw. Stoßwellen. Diese sorgen zumindest im Sprengbereich vorteilhaft dafür, dass die Atome im Festkörpergitter keine elastische Verformung (mehr) gegeneinander erfahren, also die Bindungen aufbrechen. Das Festkörpergefüge wird (größtenteils) zerstört.

Dadurch, dass die Schockwellengeschwindigkeit zumeist im Überschallbereich angesiedelt ist, stellen sich Machzahlen von 1 und größer für diese Geschwindigkeit ein. Dabei werden aufeinanderfolgende Sprengungen zur Erhöhung der Sprengwirkung von Bohrloch zu Bohrloch unter Berücksichtigung der jeweiligen Zündfolge aneinander angekoppelt, d. h. die sich von den zugehörigen Bohrlöchern ausbreitenden Schockwellen (und auch die übrigen seismischen Wellen, insbesondere Schallwellen) überlagern sich und interferieren. Es kommt zu einer Verdichtung des Schockwellensystems im Sprengbereich. Mit anderen Worten werden Wellenamplituden erzeugt, die aus der (positiven) Überlagerung einzelner Schockwellen resultieren. Dies kann durch die programmierten Zündverzögerungen eingestellt werden, so dass insgesamt ein Schockwellensystem entsteht, dessen jeweils addierte Wellengeschwindigkeiten sich im Überschallbereich ausbreiten, d.h. Geschwindigkeiten aufweisen, die oberhalb von Mach 1 liegen.

Die eingestellten Zündverzögerungen korrespondieren zu einer kumulierten Summe, die kleiner ist als die aus der Schallgeschwindigkeit im zu sprengenden Gestein resultierenden Laufzeit. D. h., die horizontale Zündgeschwindigkeit ist gleich oder größer als die Schallgeschwindigkeit im zu sprengenden Gestein.

Hierdurch lassen sich bestimmte Verzögerungsmuster der einzelnen Zündfolgen, also sog. Schussbilder, erstellen. Dabei bestimmt die Auswahl der jeweiligen Verzögerungen die Zerkleinerung des gesprengten Materials (das sog. Haufwerk) und sogar dessen Verteilung bzw. Anhäufung im Bereich der Sprengstelle bzw. im Sprengbereich. Wenn nämlich einzelne seismische Wellen so interferieren, dass an bestimmten, räumlich exakt einzugrenzenden Stellen, Interferenzberge entstehen, so ist hier mit einer besonders intensiven Öffnung der zu sprengenden Gesteinsmassen zu rechnen. Dagegen korrespondieren Interferenztäler zumeist zu der Situation, dass hier keine oder nur eine begrenzte Öffnung der Gesteinsmassen erfolgt.

Da sich die seismischen Wellen vorliegend jedoch vom jeweiligen Bohrloch ausgehend (zumindest) mit der Schallgeschwindigkeit im jeweiligen Gestein ausbreiten, kommt es zu laufenden Wellenmustern und demzufolge auch zu wandernden Interferenzbergen und -tälern. Dabei sind sowohl gegenläufige als auch mitlaufende seismische Wellen bzw. Schallwellen und/ oder Schockwellen denkbar.

Jedenfalls führt dies insgesamt dazu, dass durch die beschriebenen Wellenkollisionen Verdichtungseffekte durch das multiple Hin- und Her- bzw. Durchlaufen der jeweiligen Wellenfronten durch die Gesteinsmassen beobachtet werden. Es kommt also durch die mit bestimmter Zündfolge nacheinander explodierenden Sprengladungen in den zugehörigen Bohrlöchern zu einem quasi - kontinuierlichen Prozess der Erzeugung einer seismischen Interferenz- bzw. Schockwelle mit Strömungscharakter. Dies führt dazu, dass zumindest im sog. Nahfeldbereich (Sprengbereich) die zu sprengenden Gesteinsmassen in ein Mineralgemenge mit kolloidal-mechanischem Zusammenhalt überführt werden.

Dieser Nahfeldbereich ist dadurch gekennzeichnet, dass die durch die Sprengung erzeugte Schockwelle bzw. seismische Welle hier besonders hochfrequent ist. Diese hochfrequente Schockwelle nähert sich entfernungsabhängig der Schallgeschwindigkeit im zu sprengenden Gestein und auch der zugehörigen Eigenfrequenz.

Die beschriebene Schockwirkung lässt sich auf eine gleichsam impulsartige Anregung der Gesteinsmassen infolge der Detonation der Sprengladung im zugehörigen Bohrloch zurückführen, welche im Frequenzraum zu den hier beobachteten ultrahohen Frequenzen im Bereich von 400 Hz bis zu mehreren kHz korrespondiert.

Jedenfalls sind Frequenz und Amplitude dieser Schockwellen im Nahfeldbereich bzw. Nahbereich (Sprengbereich) geeignet, das Festkörpergefüge der Gesteinsmassen so stark anzuregen, dass dies eine teilweise oder gänzliche Auflösung des Festkörpers zur Folge hat. Folglich legt der Nahfeldbereich bzw. Nahbereich den eigentlichen Sprengbereich fest, innerhalb dessen sich die seismische Welle bzw. Schockwelle konzentrisch vom Mittelpunkt der Erregerquelle, also der Sprengladung bzw. dem Bohrloch, ausbreitet.

Wie bereits ausgeführt, hängen die frei programmierbaren Zündverzögerungen und die sich hieraus ergebende Zündgeschwindigkeit entscheidend von der Schallgeschwindigkeit im jeweils aufzusprengenden Gestein ab. Mit anderen Worten muss die Zündgeschwindigkeit an die sich einstellenden physikalischen Geschwindigkeiten (insbesondere Schallgeschwindigkeit) angepasst werden.

Um dies zu erreichen, schlägt die Erfindung vor, dass die seismische Geschwindigkeit bzw. Schallgeschwindigkeit im zu sprengenden Gestein zuvor, d. h. vor der Programmierung der Zünder und natürlich vor der Sprengung, messtechnisch und/oder rechnerisch durch Simulationen ermittelt wird. Zu diesem Zweck lassen sich beispielsweise Bohrprotokolle heranziehen, die ein ziemlich genaues Abbild der jeweiligen Gesteinsformationen liefern. Aus diesen Bohrprotokollen kann auf die zu erwartenden seismischen Geschwindigkeiten zurückgeschlossen werden, so dass sich anhand dieser Erkenntnisse die horizontale Zündgeschwindigkeit, also die Geschwindigkeit der Zündung vom ersten Bohrloch bis zum letzten Bohrloch, bemisst bzw. einstellen lässt.

Dabei ist es grundsätzlich auch denkbar, unter Rückgriff auf jeweils am Außenrand des gewünschten Sprengbereiches angeordnete Bohrlöcher gegenläufige Schockwellen bzw. seismische Wellen zu erzeugen. Hierdurch kann das Sprengfeld in einer Weise begrenzt werden, die bisher im Stand der Technik nicht für möglich gehalten wurde. Hierfür sorgt immer das gleichsam frei programmierbare Schussbild mit den jeweils eingestellten Verzögerungen von Sprengung zu Sprengung.

Neben der erzeugten seismischen Welle bzw. Schallwelle (Schockwelle) dient zusätzlich noch zur Zerkleinerung des gesprengten Gesteins eine zeitlich nach Umsetzung des Sprengstoffes folgende Gasdruckwelle. Diese wird mit gegenüber der seismischen Welle geringerer Fortpflanzungsgeschwindigkeit, der sog. Detonationsdruckwellengeschwindigkeit, erzeugt. Jedenfalls unterstützt die Gasdruckwelle die Sprengwirkung der Schockwelle. Denn diese Gasdruckwelle dringt in bereits bestehende Haarrisse ein, so dass die zugehörigen Gesteinsbrocken hierdurch geöffnet werden. Auch ist es denkbar, dass die Gasdruckwelle selbst Gestein oder bestimmte Gesteinsbrocken zerkleinert.

In diesem Zusammenhang sieht die Erfindung ferner vor, dass die Schockwellengeschwindigkeit bzw. seismische Geschwindigkeit und die Detonationsdruckwellengeschwindigkeit aufeinander abgestimmt und im Überschall- respektive Unterschallgeschwindigkeitsbereich angesiedelt sind.

Diese Abstimmung der Schockwellengeschwindigkeit und der Detonationsdruckwellengeschwindigkeit aufeinander lässt sich darauf zurückführen, dass die Detonationsdruckwellengeschwindigkeit natürlich von dem Charakter und dem mechanischen Zusammenhalt der aufgesprengten Gesteinsmassen abhängt. Tendenziell ist mit einer umso größeren Detonationsdruckwellengeschwindigkeit zu rechnen, je geringer die Korngröße der jeweils aufgesprengten Gesteinsmasse nach der Sprengung bemessen ist. Diese wiederum ist Folge der Interferenzen der Schockwellen.

Im Rahmen der Erfindung lassen sich auch sogenannte Vorspaltsprengungen und Produktionssprengungen nicht nur voneinander unterscheiden, sondern auch synchronisieren. Unter Vorspaltreihen sind im Rahmen der Erfindung bestimmte Bohrlochtopologien im Rahmen des erzeugten Bohrlochmusters zu verstehen. Derartige Vorspaltreihen finden sich zumeist als Begrenzung des eigentlichen Sprengbereiches und sollen u. a. für eine möglichst gerade und stabile Abbauwand nach Beendigung der Sprengung sorgen. Dementsprechend ist es denkbar, dass Vorspaltbohrlöcher den Sprengbereich insgesamt umschließen oder zumindest an einer Seite begrenzen, wo die beschriebene gerade und stabile Abbauwand gewünscht wird. Die Sprengung der zugehörigen Sprengladungen in den die Vorspaltreihen bildenden Bohrlöchern wird dabei als Vorspaltsprengung bezeichnet. Im Gegensatz dazu dienen Produktionssprengungen dem eigentlichen Zweck, die Gesteinsmassen innerhalb des Sprengfeldes bzw. Sprengbereiches aufzulösen.

Durch die präzise und programmierbare Einstellung der jeweils verwendeten elektronischen Zünder ist es möglich, die Vorspaltsprengung und die eigentliche Produktionssprengung aufeinander abzustimmen. Dabei wird zumeist so vorgegangen, dass nach Zünden der Produktionssprengung in unmittelbarem zeitlichen Abstand eine zugehörige Vorspaltsprengung durchgeführt wird. Hierdurch wird erreicht, dass die von den zugehörigen Produktionsbohrlöchern jeweils ausgehenden seismischen Wellen mit den kurz danach ausgesandten seismischen Wellen der Vorspaltbohrlöcher interferieren.

In diesem Zusammenhang wird die Auslegung so getroffen, dass die jeweiligen Ausbreitungsrichtungen mehr oder minder entgegengesetzt verlaufen, so dass es zu Wellenkollisionen innerhalb des Sprengfeldes kommt. Dieser Effekt wird noch durch die üblicherweise an der zu definierenden Abbauwand bzw. sogenannten freien Fläche reflektierten seismischen Wellen der zuerst gezündeten Produktionsbohrlöcher verstärkt.

Jedenfalls erfolgt eine Synchronisation zwischen Vorspaltsprengung und Produktionssprengung dergestalt, dass Erschütterungen im Sprengbereich (und auch außerhalb des Sprengbereiches) neutralisiert werden. Im Idealfall wird also der Sprengbereich (und der ihn umgebende Außenbereich) bzw. die gewünschte Abbauwand nur unwesentlich erschüttert.

Dabei liegt es selbstverständlich im Rahmen der Erfindung, einzelne Bohrlochsprengungen zeitlich zu einer gemeinsam gezündeten Bohrlochreihe bzw. Vorspaltbohrlochreihe zusammenzufassen. In gleicher Weise können einzelne Produktionsbohrlöcher ein Konglomerat bilden, welches gemeinsam gezündet wird. Dies gilt natürlich grundsätzlich für sämtliche Bohrlöcher im Rahmen der Erfindung, d. h. ungeachtet der vorgenannten Unterscheidung zwischen Vorspaltbohrlöchern und Produktionsbohrlöchern. Denn Bohrlochmuster, Zündfolgen bzw. Schussbilder und jeweilige Verzögerungen der Zündungen untereinander können bekanntlich frei wählbar programmiert werden.

Insgesamt ermöglicht die beschriebene Vorspalttechnik insbesondere in sensiblen und sogar bewohnten Gebieten eine zuvor festgelegte und definierte Begrenzung des Sprengbereiches. Dabei bildet die Vorspaltreihe praktisch einen Reflektionshorizont für die eigentliche Produktionssprengung. - Gegenstand der Erfindung ist auch ein Bohrlochmuster, wie es in den Patentansprüchen 9 und 10 beschrieben wird.

Immer erlauben die regelmäßig eingesetzten elektronischen Zünder eine praktisch totale Kontrolle über den jeweils programmierten Zündzeitpunkt. Hierdurch lässt sich nicht nur die Abbrandgeschwindigkeit der Sprengstoffe beherrschen, sondern diese kann auch zur Manipulation der Sprengwirkung im jeweiligen Bohrloch genutzt werden. Dies ist unter Berücksichtigung der kopf- und bodenseitigen Anordnung einer Sprengladung mit Bezug zum jeweiligen Bohrloch bereits beschrieben worden.

Als weitere Vorteile des erfindungsgemäßen Verfahrens sind zu nennen, dass mit der Auslegung der Zündanlage bzw. durch die Kopplung der Zündungen untereinander und deren Programmierung eine praktisch neue Wirkungsebene erschlossen wird. Mit anderen Worten lässt sich eine Sprengung nun nicht mehr durch die Bohrlochgeometrie und den eingesetzten Sprengstoff allein beeinflussen, sondern zusätzlich noch durch die beschriebene Programmierung und die eingestellte Zündabfolge.

Dabei lassen sich aus Schwingungen außerhalb des Sprengfeldes, d. h. im sogenannten Fernfeldbereich, Erkenntnisse zur Schadenskontrolle gewinnen, wie dies grundsätzlich bekannt ist. Auch können hieraus wichtige Ergebnisse für nachfolgende Sprengungen gewonnen werden. Denn die sich im Fernfeld fortpflanzenden seismischen Wellen liefern natürlich hervorragende Eingangswerte (insbesondere die Schallgeschwindigkeit im zugehörigen Material) für hier eventuell anzustrengende nachfolgende Sprengungen. Tatsächlich können aus diesen seismisch gewonnenen Werten natürlich in der beschriebenen Art und Weise die einzustellenden Zündgeschwindigkeiten, insbesondere die sogenannte horizontale Zündgeschwindigkeit, abgeleitet werden. Dabei ist wie üblich entscheidend, dass das letzte zu zündende Bohrloch kurz vor dem Eintreffen der Schockwelle gezündet wird.

Im Rahmen des beschriebenen Verfahrens lässt sich folglich der spezifische Sprengstoffverbrauch deutlich reduzieren, weil Interferenzen der erzeugten seismischen Wellen bzw. Schockwellen bewusst und gezielt ausgenutzt werden. Dies führt zudem zu einem verringerten Aufwand bei der Herstellung der jeweiligen Bohrlöcher. Außerdem eröffnet die Erfindung die Möglichkeit, zumindest im Randbereich gegenläufige Schockwellen erzeugen zu können, so dass ein eng eingegrenztes Sprengfeld definiert ist und profilübergreifende Auswirkungen infolge der Sprengung auf ein Minimum reduziert sind.

Gegenüber dem Stand der Technik und bei kurzen Bohrlochabständen lassen sich insbesondere sogenannte sympathetische Übertragungen von einem zum Nachbarloch vermeiden. Das heißt, es kommt ausdrücklich nicht zu einer Verdichtung einer Sprengladung im benachbarten Bohrloch durch die mittels des erstgezündeten Bohrloches erzeugte Schockwelle. Nichtdetonationen, wie sie früher beobachtet wurden, sind also ausgeschlossen. Denn bevor die seismische Welle bzw. Schockwelle das benachbarte Bohrloch erreicht hat, ist dessen Zündung bereits erfolgt.

Dies hat darüber hinaus zur Konsequenz, dass der Sprengbetrieb insgesamt deutlich sicherer und einfacher wird. Dabei ist grundsätzlich auch die Einhaltung zusätzlicher Sicherheitsstandards denkbar, wie sie in der eingangs bereits zitierten deutschen Offenlegungsschrift 197 21 839 A1 dargelegt sind.

Im Folgenden wird die Erfindung anhand einer lediglich ein Ausführungsbeispiel darstellenden Zeichnung näher erläutert; es zeigen:

Fig. 1    ein Bohrlochmuster mit drei untereinander vernetzten Bohrlochreihen,

Fig. 2    ein anderes Bohrlochmuster,

Fig. 3    einen Schnitt durch Fig. 2,

Fig. 4    ein wiederum abgewandeltes Bohrlochmuster,

Fig. 5   einen Zünder in schematischer Darstellung,

Fig. 6   ein Bohrlochmuster bei einer Vorspaltsprengung und

Fig. 7   ein ergänztes Bohrlochmuster, von welchem die Fig. 1 einen Ausschnitt darstellt.

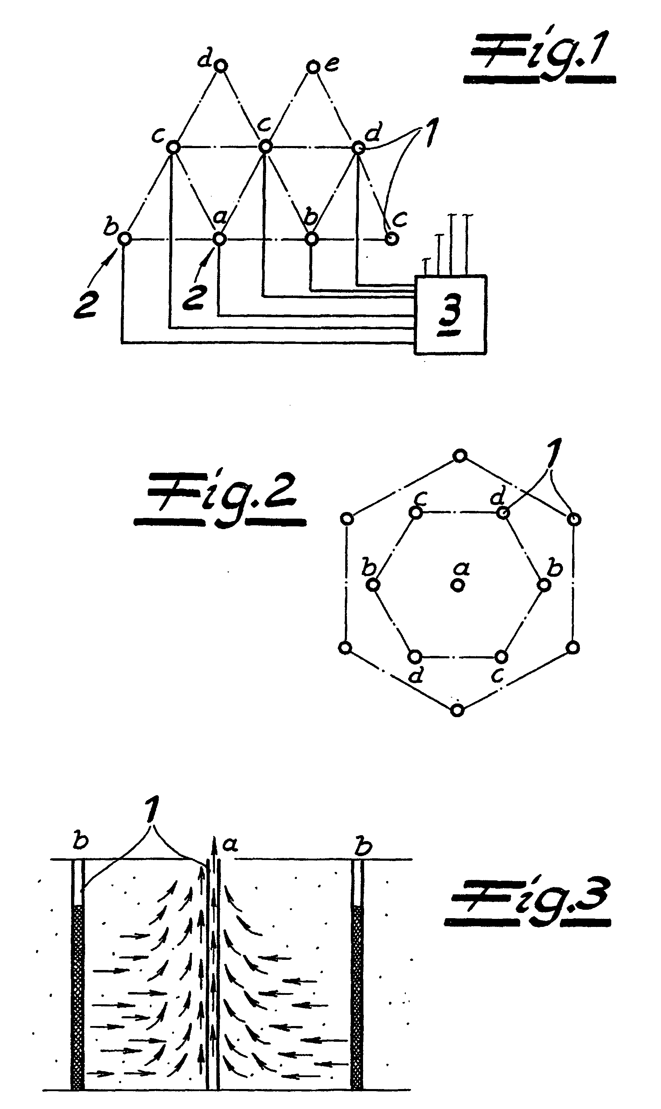

In der Fig. 1 ist ein Bohrlochmuster mit einzelnen Bohrlöchern 1 dargestellt. In diese Bohrlöcher 1 sind Sprengladungen mit zugehörigen Zündern 2 eingesetzt, die sämtlich an eine zentrale Steuerungseinheit 3 angeschlossen sind.

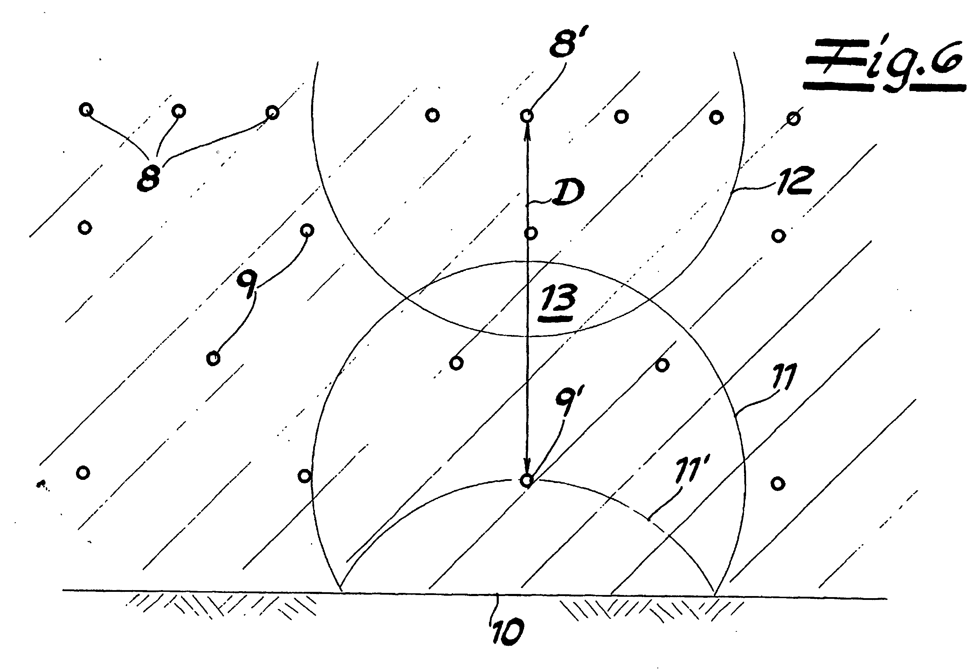

Bei diesen Zündern 2 handelt es sich im Rahmen des Ausführungsbeispiels um elektronische Zünder 2, die wie in Fig. 5 dargestellt im Einzelnen aufgebaut sind. So weist jeder elektronische Zünder 2 einen Energiespeicher 4 in Form eines oder mehrerer Kondensatoren auf. Diesem Energiespeicher 4 folgt ein elektronischer Schalter 5, bei dem es sich im Rahmen des Ausführungsbeispieles um einen Schalttransistor handelt. Dieser Schalttransistor 5 wird mit Hilfe eines Datensteuerteiles bzw. einer Rechnereinheit 6 oder eines Mikrochips gesteuert. Sobald dieser Mikrochip bzw. Rechner 6 den elektronischen Schalter 5 in den leitenden Zustand überführt, steht die vom Energiespeicher 4 gelieferte elektrische Energie an zugehörigen Zündleitungen 7 zur Verfügung, die unmittelbar die im Einzelnen nicht dargestellte Sprengladung zünden. Selbstverständlich sind noch weitere für die Erfindung nicht wesentliche Bestandteile des elektronischen Zünders 2 wie Spannungsversorgung und/oder Gleichrichter verwirklicht, wie dies im Detail in der DE-OS 197 21 839 beschrieben ist.

Jedenfalls wird deutlich, dass mit Hilfe des vom Mikroprozessor 6 gesteuerten elektronischen Schalters 5 das Zünden der Sprengladung äußerst präzise eingestellt werden kann, und zwar mit einer Genauigkeit, die im Submillisekundenbereich liegt. Dabei sorgt die zentrale Steuereinheit 3 für den entsprechenden Abgleich der einzelnen Zünder 2 untereinander. Grundsätzlich kann auf eine derartige zentrale Steuereinheit 3 natürlich auch verzichtet werden, so dass dann die einzelnen Zünder 2 beim Einbringen in das jeweilige Bohrloch 1 programmiert werden (müssen).

Dagegen ermöglicht die Steuereinheit 3 eine zentrale Programmierung des einzustellenden Schussbildes und natürlich auch dessen Änderung, falls dies gewünscht sein sollte. Insgesamt sind die Zünder 2 entsprechend dem bereits beschriebenen Verfahren frei programmierbar, wobei ein dem jeweils vorliegenden mineralogischen und/oder geologischen Umfeld entsprechendes Schussbild, d. h. eine bestimmte Zündfolge bzw. ein wählbares Zündmuster, erzeugt werden kann.

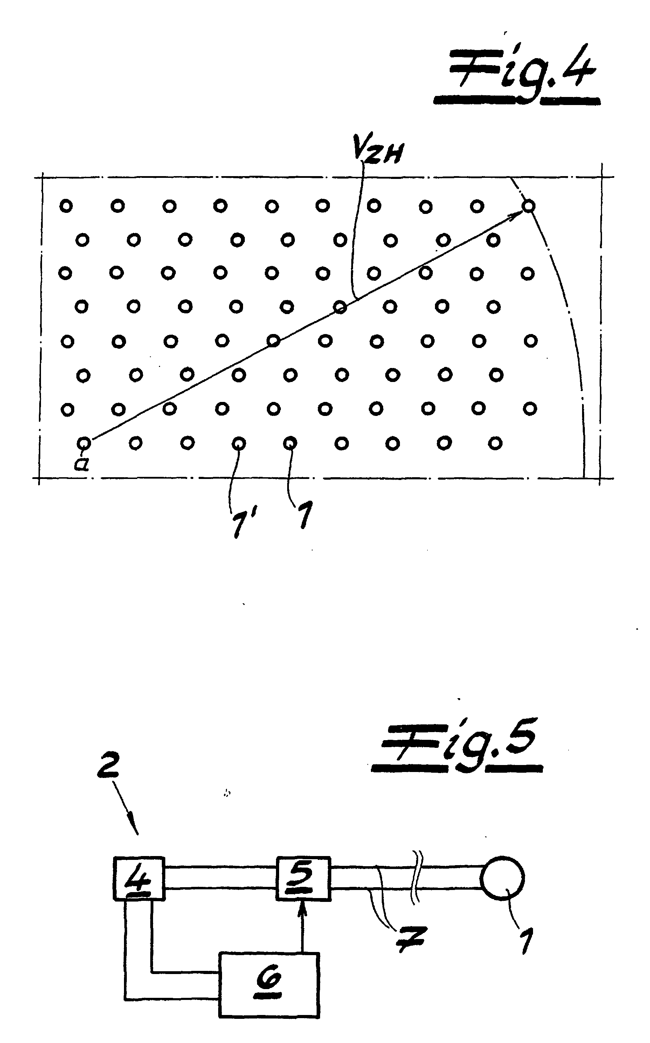

Zumeist sind mehrere Reihen an Bohrlöchern 1 verwirklicht. Dabei sind die Zünder 2 unter Rückgriff auf die zentrale Steuereinheit 3 so miteinander verschaltet und werden entsprechend ausgelöst, dass sich ein reihenübergreifendes Zündmuster darstellen lässt. Im Rahmen des Ausführungsbeispieles nach Fig. 1 sind die Bohrlöcher 1 in Dreiecksformation angeordnet. Die Variante nach den Fig. 2 und 3 zeigt eine kreisförmige Anordnung der Bohrlöcher 1. Entsprechendes gilt für das Bohrlochmuster nach Fig. 4.

Aus vorgeschalteten Untersuchungen bzw. Messungen und/oder Simulationen lässt sich abschätzen, mit welchen Schallgeschwindigkeiten sich die im Zuge jeder einzelnen Sprengung erzeugten seismischen Wellen im aufzulösenden Gestein fortbewegen. Derartige Erkenntnisse gewinnt man beispielsweise aus Bohrprotokollen. Dabei spielen mögliche Inhomogenitäten keine dominierende Rolle, solange gewährleistet ist, dass die sogenannte horizontale Zündgeschwindigkeit $v_{ZH}$ größer oder gleich der Schallgeschwindigkeit im Gestein, der sogenannten Gesteinsgeschwindigkeit $V_G$ bemessen ist, d. h. es muss gelten:

$$v_{ZH} \geq V_G.$$

Solange diese Relation (selbstverständlich inklusive "Sicherheitspolster") eingehalten wird, ist das geologische Umfeld für die erfindungsgemäße Sprengung von untergeordneter Rolle. Denn im Rahmen der Erfindung ist grundsätzlich immer gewährleistet, dass eine von einem Bohrloch 1' ausgehende Schockwelle erst dann das zugehörige benachbarte Bohrloch 1 erreicht, wenn hier bereits eine Zündung stattgefunden hat (vgl. beispielhaft die Fig. 4). Folglich kommt es im jeweils dargestellten Sprengfeld zu einer gezielten Ausbreitung und Entstehung von jeweils fortlaufenden Schockwellenmustern, die in gewünschter und determinierter Art und Weise miteinander interferieren.

Im Rahmen der Fig. 1 sind mit den Kleinbuchstaben a, b, c, d und e jeweils Bohrlöcher 1 bezeichnet, wobei das erste Bohrloch - a - zuerst gezündet wird und dann die Bohrlöcher 1 mit der Bezeichnung b folgen usw. Die Kleinbuchstaben repräsentieren also die Zündfolge bzw. das Zündmuster. Man erkennt, dass drei (oder mehr) Bohrlochreihen miteinander vernetzt sind und ein reihenübergreifendes Zündmuster bilden.

Dabei wird die Sprengung am Bohrloch 1 mit der Kennzeichnung a als Einzelschuss begonnen. Dieser Einzelschuss a lässt sich entsprechend der Bohrlochtiefe gegenüber den Folgeschüssen so verzögern, dass eine Aufwärtsbewegung der Massen im Erstschussbereich möglich wird. Dabei sind um diesen Einzelschuss a Dreieckskomponenten kreisförmig so angeordnet, dass sie in Richtung der vorher durch den Einzelschuss a geschaffenen Aufwärtsbewegung hineinwirken. Hierdurch wird ein erhöhter Anteil der Sprengenergie in Gesteinszerstörung umgesetzt und es kommt zu der beschriebenen Fragmentation.

Im Rahmen des Ausführungsbeispieles nach Fig. 2 lassen sich mehrere Öffnungskreise um eine symmetrische Mitte mit der Bezeichnung a anordnen. Dabei werden jeweils gegenüberliegende Bohrlöcher 1 (b, c, d) paarweise, und zwar gleichzeitig gezündet. Hierdurch lässt sich eine vollwirksame Öffnung des Bohrloches 1, welches zuerst gesprengt wird (Bezeichnung a), darstellen. Dies kommt insbesondere im Schnitt nach Fig. 3 zum Ausdruck. Die Fig. 4 visualisiert die erfindungsgemäß eingestellte horizontale Zündgeschwindigkeit $v_{ZH}$, die in der beschriebenen Art und Weise immer größer oder gleich der (zuvor ermittelten) Gesteinsgeschwindigkeit $v_G$ bemessen ist.

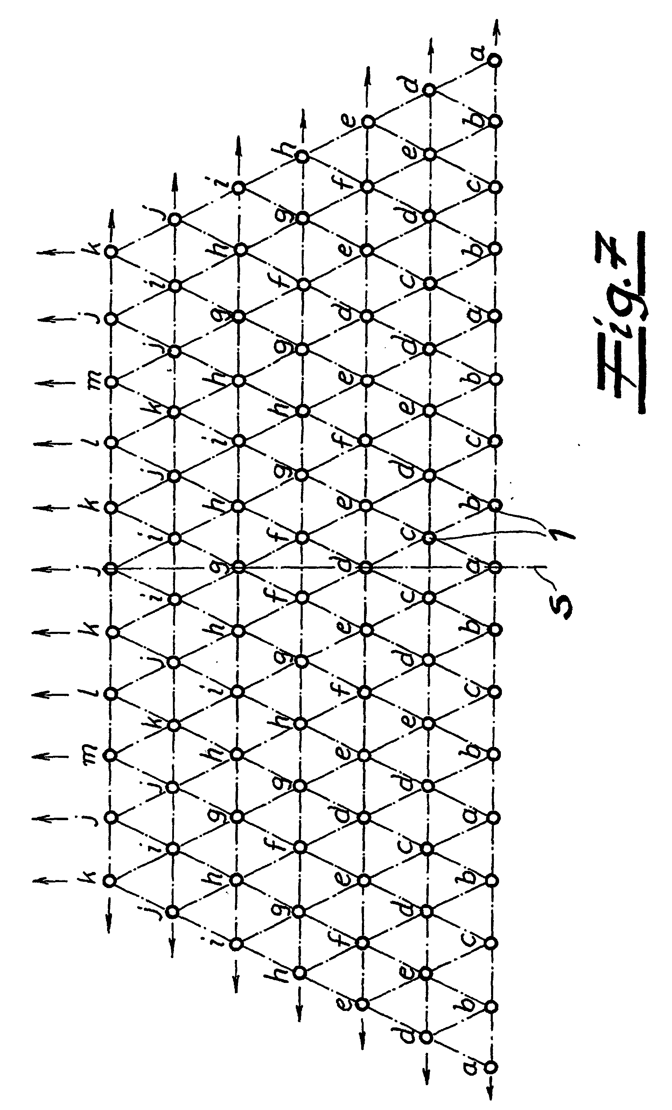

Im Rahmen der Fig. 6 ist eine Vorspaltreihe aus Vorspaltbohrlöchern 8 dargestellt. Daneben finden sich Produktionsspaltbohrlöcher 9. Außerdem erkennt man noch eine sogenannte freie Fläche 10, bei welcher es sich um eine Diskontinuität im Gesteinsgefüge handeln kann, die in der dargestellten Art und Weise zu Reflexionen der mit Hilfe der Produktionsbohrlöcher 9 erzeugten seismischen Wellen führt.

Nach dem Ausführungsbeispiel werden die Vorspaltbohrlöcher 8 gemeinsam bzw. gruppenweise gezündet. Dies gilt auch für die Produktionsbohrlöcher 9. Dies ist durch zugehörige Stoßwellenfronten 11, 12 dargestellt. Dabei korrespondiert die Stoßwellenfront 11 zu einem zuerst gezündeten Produktionsbohrloch 9'. Hierzu gehört auch eine reflektierte Stoßwellenfront 11'.

In kurzem zeitlichen Abstand nach Detonation des Produktionsbohrloches 9' ist das zugehörige Vorspaltbohrloch 8' gezündet worden. Folglich hat dessen Stoßwellenfront 12 einen geringeren Weg im Vergleich zur Stoßwellenfront 11 zurückgelegt. In einem Bereich 13 kommt es zur Interferenz beider Stoßwellenfronten 11, 12. Dieser Bereich 13 dehnt sich bei fortschreitenden Wellenfronten 11, 12 letztlich bis zur Freifläche 10 aus und sorgt dafür, dass die Erschütterungen in diesem Bereich 13 deutlich herabgesetzt werden. Es wird also vermieden, dass sich seismische Wellen über das (schraffiert angedeutete) Sprengfeld hinaus in merklichem Umfang ausdehnen können. Dabei sorgen die reflektierten Stoßwellenfronten 11' für eine Verstärkung des beschriebenen Effektes.

Auch in diesem Fall wird im Kern so vorgegangen, dass ein Abstand D zwischen dem Produktionsbohrloch 9' und dem zugehörigen Spaltbohrloch 8' die zeitliche Verzögerung ΔT der zugehörigen Zündzeitpunkte unter Berücksichtigung der Gesteinsgeschwindigkeiten $v_G$ wie folgt beeinflusst:

$$\Delta T \leq D / v_G$$

Insgesamt breiten sich die im Zuge der Sprengung des jeweiligen Bohrloches 1 entstehenden seismischen Wellen natürlich konzentrisch als Kugelwellen aus, wobei nicht selten Schallwellengeschwindigkeiten von 1000 m/s und mehr erreicht werden. Dabei interferieren die von den einzelnen Bohrlöchern 1 ausgehenden Schockwellen räumlich und zeitlich, wobei je nach eingestellter Verzögerung zwischen den einzelnen Zündern 2 gewünschte Interferenzenmuster im Sprengfeld dargestellt werden können. Diese Interferenzmuster können eine insgesamt durch das Sprengfeld fortlaufende Welle formen. Randseitig des Sprengfeldes erzeugte gegenläufige Schockwellen sorgen dafür, dass hier eine mehr oder minder vollständige Auslöschung der seismischen Wellen erfolgt, so dass Beeinträchtigungen über den Randbereich hinaus nicht oder nur begrenzt zu befürchten sind (vgl. Fig. 6). Immer wird eine gezielt hinsichtlich Ausbreitungsgeschwindigkeit, Amplitude und Richtung vorwählbare Kugelwelle infolge der multiplen Interferenzen im Sprengfeld erzeugt, die für die gewünschte Zerkleinerung der aufzulösenden Gesteinsmassen sorgt.

Im Rahmen der Fig. 7 ist ein im Vergleich zur Fig. 1 ergänztes Bohrlochmuster dargestellt. Mit den Kleinbuchstaben a, b, c, d, e, f, g, usw. wird wiederum die Reihenfolge der Sprengungen gekennzeichnet. Wenn beispielsweise der Einzelschuss a dem Beginn der Sprengung repräsentiert, so folgt danach die Sprengung der mit b gekennzeichneten Bohrlöcher 1, und zwar vorliegend in einem Zeitabstand von ca. 40 bis 60 msek. Dies hängt natürlich insbesondere vom Abstand der Bohrlöcher 1 zueinander und der aufzulösenden Gesteinsmorphologie ab. Auf die Sprengung b folgen die Bohrlöcher mit der Kennzeichnung c, und zwar in einem zeitlichen Abstand von ca. 3 bis 10 msek im Vergleich zu den Bohrlöchern b. Ähnlich sind auch die zeitlichen Abstände zu den nachfolgenden Sprengungen d, e, f, usw. bemessen.

Das letzte dargestellte und zu sprengende Bohrloch 1 mit der Bezeichnung 1 wird ca. 90 bis 100 msek nach dem Bohrloch 1 mit der Kennzeichnung a gezündet. Dabei beträgt der Abstand zwischen dem erstgezündeten Bohrloch 1 mit der Kennzeichnung a zu dem zuletzt ausgelösten Bohrloch 1 mit der Bezeichnung 1 ca. 200 m. Hieraus errechnet sich eine horizontale Zündgeschwindigkeit $v_{ZH}$ von ca. 2000 m/s. Diese horizontale Zündgeschwindigkeit $v_{ZH}$ ist deutlich größer als die Gesteinsgeschwindigkeit $v_G$ bemessen, die in dem dargestellten Beispiel nicht einmal 1000 m/s erreicht. D.h. es gilt die zuvor bereits erläuterte Relation:

$$v_{ZH} \geq v_G.$$

Das in Fig. 7 dargestellte Bohrlochmuster ist spiegelsymmetrisch zu einer Symmetrieachse S ausgeführt. Im Übrigen zeigt sich, dass jeweils nachfolgende Zündungen über zumindest zwei benachbarte Zündreihen verteilt sind, so dass sich das bereits angesprochene reihenübergreifende Zündmuster ergibt. Außerdem werden die Bohrlöcher 1 im Großen und Ganzen von Reihe zu Reihe fortlaufend gezündet. Hierdurch stellen sich beginnend mit der ersten Reihe durch den Sprengbereich fortlaufende Schockwellen ein. Selbstverständlich ist die Zündverzögerung zwischen benachbarten Bohrlöchern 1 wiederum so bemessen, dass beim Eintreffen der Schockwelle am benachbarten Bohrloch 1 dieses bereits zur Detonation gelangt ist. - Es sollte abschließend noch einmal betont werden, dass die angegebenen Werte für die Geschwindigkeiten und Zündverzögerungen natürlich nur Beispielangaben darstellen, die selbstverständlich je nach geologischem Umfeld zu variieren sind.

Je nach Auflösung der Gesteinsmassen in den zuvor beschriebenen Sprengungen stellt sich dann auch eine bestimmte Detonationsdruckwellengeschwindigkeit der der seismischen Welle folgenden Gasdruckwelle ein.

Diese Gasdruckwelle entsteht nach der Umsetzung des Sprengstoffes und wird mit einer gegenüber der seismischen Welle geringeren Fortpflanzungsgeschwindigkeit erzeugt. Zumeist liegt diese Fortpflanzungsgeschwindigkeit im subsonischen Bereich, während die Schockwellengeschwindigkeit im Überschallbereich (supersonischer Bereich) angesiedelt ist.

**Patentansprüche**

1. Verfahren zum Sprengen von Gesteinsmassen oder dergleichen Massen Übertage oder Untertage, wonach

   - in Bohrlöcher (1) Sprengladungen mit jeweils zugehörigem elektronischen Zünder (2) eingesetzt werden, und wonach

   - die Zünder (2) und deren jeweilige Verzögerungsintervalle zueinander in Abhängigkeit von dem mineralogischen/geologischen Umfeld und den daraus resultierenden seismischen Geschwindigkeiten ($v_G$) sowie unter Berücksichtigung des jeweiligen Schussbildes programmiert werden,

   **dadurch gekennzeichnet, dass**

   - jeweils in ein Bohrloch (1) ein elektronischer Bodenzünder und ein elektronischer Kopfzünder eingesetzt sind und

   - auf den gleichen oder einen abweichenden Zündzeitpunkt programmiert werden, und dass

   - dadurch gegenläufige Detonationsfronten in etwa in der Mitte der Ladungssäule unter Verdopplung der Detonationsgeschwindigkeit und beschleunigten Umsetzung der Ladesäule aufeinandertreffen.

2. Verfahren nach Anspruch 1, **dadurch gekennzeichnet, dass** elektronische Zünder (2) mit einem stufenlos und exakt einstellbaren Zündzeitpunkt eingesetzt werden.

3. Verfahren nach Anspruch 1 oder 2, **dadurch gekennzeichnet, dass** zur Erhöhung der Sprengwirkung einzelne, von den jeweiligen Bohrlöchern (1) ausgehende, Schockwellenfronten zur Öffnung des Gefüges des zu sprengenden Gesteins interferieren.

4. Verfahren nach einem der Ansprüche 1 bis 3, **dadurch gekennzeichnet, dass** zur gegenseitigen Beeinflussung aufeinanderfolgender Sprengungen unter Berücksichtigung der jeweiligen Zündfolge Zündverzögerungen zwischen erstem und letztem Bohrloch eingestellt werden, die Zündverzögerungen zwischen erstem und letztem Bohrloch zu einer Zündgeschwindigkeit (horizontale Zündgeschwindigkeit $v_{ZH}$) korrespondieren, welche gleich oder größer als die Schallgeschwindigkeit im zu sprengenden Gestein (Gesteinsgeschwindigkeit $v_G$) ist (also $v_{ZH} \geq v_G$).

5. Verfahren nach einem der Ansprüche 1 bis 4, **dadurch gekennzeichnet, dass** die Schallgeschwindigkeit ($v_G$) im zu sprengenden Gestein zuvor messtechnisch und/oder rechnerisch durch Simulationen ermittelt wird.

6. Verfahren nach einem der Ansprüche 1 bis 5, dass neben der erzeugten seismischen Welle (Schallwelle) eine zeitlich nach Umsetzung des Sprengstoffes folgende Gasdruckwelle mit gegenüber der seismischen Welle geringerer Fortpflanzungsgeschwindigkeit (Detonationsdruckwellengeschwindigkeit) erzeugt wird, welche die Sprengung unterstützt.

7. Verfahren nach einem der Ansprüche 1 bis 6, **dadurch gekennzeichnet, dass** die Schockwellengeschwindigkeit und die Detonationsdruckwellengeschwindigkeit aufeinander abgestimmt und im Überschall- respektive Unterschallgeschwindigkeitsbereich angesiedelt sind.

8. Verfahren nach einem der Ansprüche 1 bis 7, **dadurch gekennzeichnet, dass** Vorspaltsprengungen und Produktionssprengungen so synchronisiert werden, dass Erschütterungen im Sprengbereich neutralisiert werden.

9. Bohrlochmuster mit einzelnen Bohrlöchern (1) mit Sprengladungen sowie zugehörigen elektronischen Zündern (2), die entsprechend dem Verfahren nach einem der Ansprüche 1 bis 8 zur Erzielung eines gewünschten Schussbildes programmiert werden, wobei

   - je Bohrloch (1) ein elektronischer Bodenzünder und ein elektronischer Kopfzünder vorgesehen sind, wobei ferner

- mehrere Reihen an Bohrlöchern (1) verwirklicht sind, und wobei

- die Zünder (2) unter Erzeugung eines reihenübergreifenden Zündmusters ausgelöst werden.

10. Bohrlochmuster nach Anspruch 9, **dadurch gekennzeichnet, dass** die Bohrlöcher (1) in Dreiecks- oder Kreiskonfiguration angeordnet sind.


**Claims**

1. A method of blasting rock masses or similar masses above-ground or underground, according to which

- explosive charges with electronic fuses (2) associated with each are inserted in boreholes (1), and according to which

- the fuses (2), and the respective delay intervals between them, are programmed depending on the mineralogical/geological environment and on the seismic velocities ($v_G$) resulting therefrom, and taking into consideration the respective blasting pattern,

**characterised in that**

- an electronic bottom fuse and an electronic top fuse are inserted in each borehole (1), and

- are programmed for the same or for a different time of detonation, and that

- detonation fronts travelling in opposite directions thereby impinge on each other approximately in the middle of the blasting column, resulting in a doubling of the velocity of detonation and in an accelerated transformation of the blasting column.

2. A method according to claim 1, **characterised in that** electronic fuses (2) are used, the time of detonation of which can be adjusted continuously and exactly.

3. A method according to claim 2, **characterised in that**, in order to increase the blasting effect, individual shock wave fronts which issue from the respective boreholes (1) interfere in order to open up the structure of the rock to be blasted.

4. A method according to any one of claims 1 to 3, **characterised in that** for the mutual influencing of successive blastings, delays in detonation are set between the first and the last borehole taking into account the respective detonation sequence, and the delays in detonation between the first and the last borehole correspond to a velocity of detonation (horizontal velocity of detonation $V_{ZH}$) which is greater than or equal to the velocity of sound in the rock to be blasted (rock velocity $V_G$) (i.e. $V_{ZH} \geq V_G$).

5. A method according to any one of claims 1 to 4, **characterised in that** the velocity of sound ($V_G$) in the rock to be blasted is determined previously, by measurement and/or by computer simulations.

6. A method according to any one of claims 1 to 5, **characterised in that**, in addition to the seismic wave (sound wave) which is produced, a gas pressure wave is produced which chronologically follows the reaction of the explosive at a velocity of propagation (detonation pressure wave velocity) which is less than that of the seismic wave, and which assists blasting.

7. A method according to any one of claims 1 to 6, **characterised in that** the shock wave velocity and the detonation pressure wave velocity are matched to each other and are set in the ultrasonic or subsonic velocity range, respectively.

8. A method according to any one of claims 1 to 7, **characterised in that** pre-fission blasting and production blasting are synchronised so that shocks in the blasting region are neutralised.

9. A borehole pattern comprising individual boreholes (1) with explosive charges and with associated electronic fuses (2) which are programmed by the method according to any one of claims 1 to 8 in order to achieve a desired blasting pattern, wherein

- an electronic bottom fuse and an electronic top fuse are provided for each borehole (1), wherein in addition

- a plurality of rows of boreholes (1) is produced, and wherein

- the fuses (2) are detonated to produce a detonation pattern covering the rows.

10. A borehole pattern according to claim 9, **characterised in that** the boreholes (1) are disposed in a triangular or circular configuration.

## Revendications

1. Procédé pour faire sauter des blocs de rocher ou similaires, au jour ou au fond, selon lequel on introduit dans des trous de mine (1) des charges explosives équipées chacune d'un détonateur électronique (2) puis on programme ces détonateurs (2) et les intervalles séparant leurs allumages en fonction de l'environnement minéralogique et géologique et des vitesses de propagation sismiques ($V_G$) en résultant, ainsi qu'en tenant compte du plan de tir, **caractérisé en ce que** dans chaque trou de mine (1) est introduit un détonateur électronique de fond et un détonateur électronique de tête, programmés pour un même instant d'allumage ou des instants différents, de sorte que des fronts de détonation progressant selon des directions opposées se rencontrent à peu près au milieu de la colonne de charge avec doublage de la vitesse de détonation et transformation accélérée de la colonne de charge.

2. Procédé selon la revendication 1, **caractérisé en ce qu'** il utilise des détonateurs électroniques (2) dont les points d'allumage peuvent être réglés en continu et de manière exacte.

3. Procédé selon les revendications 1 ou 2, **caractérisé en ce que** pour augmenter l'efficacité de l'explosion, des fronts d'onde de choc individuels, partant des trous de mine (1) correspondants, interfèrent pour briser la structure de la roche à faire sauter.

4. Procédé selon l'une des revendications 1 à 3, **caractérisé en ce que** pour que les explosions qui se succèdent s'influencent réciproquement, on règle, en tenant compte de leur ordre successif, les décalages d'allumage entre le premier et le dernier trou de mine de manière qu'ils correspondent à une vitesse d'allumage (vitesse horizontale d'allumage $V_{ZH}$) au moins égale à la vitesse du son dans le rocher à faire sauter (vitesse de rocher $V_G$) (c'est-à-dire $V_{ZH} > V_G$).

5. Procédé selon une des revendications 1 à 4, **caractérisé en ce que** la vitesse du son ($V_G$) dans le rocher à faire sauter est d'abord définie en utilisant une technique de mesure et/ou le calcul basé sur des simulations.

6. Procédé selon une des revendications 1 à 5, **caractérisé en ce qu'** en plus de l'onde sismique (onde sonore), une onde de pression de gaz fait suite à la transformation de l'explosif avec une vitesse de propagation inférieure à celle de l'onde sismique (vitesse de l'onde de pression de détonation), qui apporte son assistance à l'explosion.

7. Procédé selon une des revendications 1 à 6, **caractérisé en ce que** la vitesse de l'onde de choc et la vitesse de l'onde de pression de détonation sont accordées l'une à l'autre et se trouvent respectivement dans les zones des vitesses supersoniques et subsoniques.

8. Procédé selon une des revendications 1 à 7, **caractérisé en ce que** des explosions des préfendage et des explosions de production sont synchronisées de manière que des ébranlements sont neutralisés dans la zone d'explosion.

9. Modèle d'implantation de trous de mine (1) contenant des charges explosives et les détonateurs électriques correspondants (2) qui sont programmés selon le procédé défini par les revendications 1 à 8, pour obtenir un plan de tir souhaité, selon lequel :

   dans chaque trou de mine (1) sont logés un détonateur électronique de fond et un détonateur électronique de tête,
   il existe plusieurs lignes de trous de mine (1),
   les détonateurs (2) sont allumés de manière à obtenir une propagation en ligne des allumages.

10. Modèle d'implantation selon la revendication 9, **caractérisé en ce que** les trous de mine (1) sont disposés selon une configuration triangulaire ou circulaire.

Fig.1

Fig.2

Fig.3

_Fig.4_

_Fig.5_

Fig.6

Fig. 7